# EUROPEAN PATENT SPECIFICATION

(11) **EP 4 047 749 B1**
(45) Date of publication and mention of the grant of the patent: **25.02.2026**
(21) Application number: 19954138.4
(22) Date of filing: 30.11.2019
(51) Int. Cl.: H01Q 1/12, H01Q 5/42, H01Q 1/24, H01Q 21/28

(54) **ANTENNA SYSTEM AND BASE STATION**
ANTENNENSYSTEM UND BASISSTATION
SYSTÈME D'ANTENNES ET STATION DE BASE

(43) Date of publication of application: 24.08.2022
(60) Divisional application: 25223641.9
(73) Proprietor: Huawei Technologies Co., Ltd., Shenzhen, Guangdong 518129 (CN)
(72) Inventor: XIAO, Weihong, Shenzhen, Guangdong 518129 (CN); LI, Jianping, Shenzhen, Guangdong 518129 (CN); PU, Tao, Shenzhen, Guangdong 518129 (CN); ZHANG, Runxiao, Shenzhen, Guangdong 518129 (CN)
(74) Representative: Thun, Clemens
(86) International application number: PCT/CN2019/122283
(87) International publication number: WO 2021/103032

(56) References cited:
- EP-A1- 3 573 179
- WO-A1-2017/006959
- WO-A1-2018/077408
- WO-A1-2019/084720
- CN-A- 101 695 926
- CN-A- 101 714 701
- CN-A- 108 666 742
- US-A1- 2011 175 784

## Description

### TECHNICAL FIELD

This application relates to the field of communication technologies, and in particular, to an antenna system and a base station.

### BACKGROUND

With development of the communication industry, a requirement on a communication frequency band of a base station is increasingly high, and an operator expects that the base station has more communication frequency bands. However, antenna installation platform space resources on a site of the operator are limited. Therefore, when a base station is being configured, multi-band antennas of the base station uses a solution such as nesting or stacking to increase operating frequency bands of the base station. However, in a conventional technology, when antennas of different frequency bands are placed together in a nested or stacked manner, it is difficult to add an antenna of another frequency band to the base station once the base station is constructed.

WO 2018/077408 A1 discloses a kind of antenna device for dual-band MIMO wireless communications to increase throughput in wireless networks. It discloses in detail that two antennas each operating in a different frequency band are slot antenna and dipole antenna, the dipole antenna is located directly and symmetrically above the slot antenna in a direction of polarization, and there is a reflection layer located below the slot antenna in order to reflect the wave modes transmitted by the slot antenna and/or the dipole antenna towards the direction of transmission.

### SUMMARY

This application provides an antenna system and a base station to improve communication performance of the base station. This problem is solved by the subject matter of the independent claims. Further implementation forms are provided in the dependent claims.

In a first aspect an antenna system is provided, the antenna system comprising:
∘ a first antenna array, a second antenna array, a first radome, a second radome, a first reflection panel, and a second feeding network,
∘ wherein the first antenna array and the second antenna array are antenna arrays configured to operate on different frequency bands,
∘ wherein the first antenna array and the second antenna array are stacked, and the first antenna array and the second antenna array share the first reflection panel,
o∘ wherein the first antenna array and the first reflection panel are disposed in the first radome,
∘ and the second antenna array and the second feeding network are disposed in the second radome.

For example, the first antenna array is a 5G antenna, and the second antenna array is a 2G, 3G, or 4G antenna.

During assembly, the second antenna array may be an antenna existing on a base station in a conventional technology, and the first antenna array is additional 5G antennas. As can be learned from the foregoing description, according to the antenna system provided in this embodiment of this application, different modules may be added as required to improve communication performance of the existing base station, thereby reducing costs of refitting the base station. Further, disposing the second feeding network between the first antenna array and the second antenna array facilitates arrangement of the first antenna array and the first reflection panel.

Further, the first antenna array and the first reflection panel are disposed in the first radome. The second antenna array and the second feeding network are disposed in the second radome. Therefore, the first antenna array and the second antenna array are separately protected by different radomes.

In a first implementation form of the first aspect, the antenna system further comprises a first feeding network configured to feed
the first antenna array, wherein the first antenna array is fixedly disposed on a reflection surface of the first reflection panel, the first feeding network is disposed on a side of the first reflection panel that is away from the reflection surface.

In a second implementation form of the first aspect or its first implementation form, the second feeding network is configured to feed
the second antenna array, wherein the second feeding network is disposed between the second antenna array and the first antenna array.

In a third implementation form of the first aspect or of its first or second implementation form , a second reflection panel is further included. The second antenna array includes a first part of second antennas and a second part of second antennas, wherein that the first antenna array and the second antenna array are stacked, and the first antenna array and the second antenna array share the first reflection panel comprses: the first part of second antennas and the first antenna array are stacked and shre the first reflection panel, and the second part of second antennas are disposed on the second reflection panel. Some signals of the second antenna array are reflected by disposing the second reflection panel, thereby increasing a quantity of second antennas in the second antenna array.

In a fourth implementation form of the first aspect or of its first, second, or third implementation form, a third antenna array is further included. The first antenna array, the second antenna array, and the third antenna array are antenna arrays configured to operate on different frequency bands. The third antenna array and the second part of second antennas are stacked on the second reflection panel. In this way, a communication coverage frequency band of the antenna system is increased.

In a fifth implementation form of the first aspect or of its first, second, third, or fourth implementation form of the first aspect,
the third antenna array, and the second reflection panel are disposed in the second radome. The first antenna array, the second antenna array, and the third antenna array are separately protected by the first radome and the second radome.

In a sixth implementation form of the first aspect or of the first, second, third, fourth, or fifth implementation form, a fourth antenna array is further included. The first antenna array, the second antenna array, the third antenna array, and the fourth antenna array are antenna arrays configured to operate on different frequency bands. The fourth antenna array, the second antenna array, and the third antenna array are stacked on the second reflection panel. In this way, a communication coverage frequency band of the antenna system is increased.

In a seventh implementation form of the first aspect or its implementation forms, the second radome is an L-shaped structure, and the first radome is located at the notch position of the second radome.

In an eighth implementation form of the first aspect or its implementation forms, the first radome and the second radome are arranged in a first direction, wherein the first direction is a direction perpendicular to a reflection surface of the first reflection panel.

In a ninth implementation form of the first aspect or its implementation forms, the first reflection panel and the second reflection panel are arranged along a second direction, the second direction is perpendicular to a first direction, and the first direction is a direction perpendicular to a reflection surface of the first reflection panel.

According to a second aspect, a base station is provided. The base station includes any one of the foregoing antenna systems and a digital phase shifter connected to the antenna system. According to the antenna system, different modules may be added as required to improve communication performance of the existing base station, thereby reducing costs of refitting the base station.

### BRIEF DESCRIPTION OF DRAWINGS

FIG. 1 is a block diagram of a structure of an antenna system according to an embodiment of this application;
FIG. 2 is a block diagram of a structure of another antenna system according to an embodiment of this application;
FIG. 3 is a block diagram of a structure of another antenna system according to an example not forming part of the invention;
FIG. 4 is a block diagram of a structure of another antenna system according to an example not forming part of the invention;
FIG. 5 is a block diagram of a structure of another antenna system according to an example not forming part of the invention;
FIG. 6 is a block diagram of a structure of another antenna system according to an embodiment of this application; and
FIG. 7 is a block diagram of a structure of another antenna system according to an embodiment of this application.

### DESCRIPTION OF EMBODIMENTS

For ease of understanding an antenna system provided in embodiments of this application, an application scenario of the antenna system provided in the embodiments of this application is described first. An example of the antenna system provided in this application is applied to a base station. Construction of base stations is an important part of investment of mobile communication operators. The construction of base stations is generally performed based on factors such as coverage, call quality, investment benefit, construction difficulty, and maintenance convenience. With development of mobile communication network services towards the direction of digitization and packetization, the development trend of mobile communication base stations is broadband and large coverage. However, once a base station in a conventional technology is built, an antenna of another antenna frequency band cannot be added, or a relatively high expense needs to be spent to improve the base station. Therefore, the embodiments of this application provide an antenna system to improve a frequency band of a base station and communication performance of the base station.

An antenna system provided in the embodiments of this application includes at least two antenna arrays, and each antenna array includes a plurality of antennas arranged in arrays. Each antenna array operates on a different operating frequency band. For example, if the antenna system includes a first antenna array and a second antenna array, the first antenna array and the second antenna array operate on two different operating frequency bands; or if the antenna system includes a first antenna array, a second antenna array, and a third antenna array, the first antenna array, the second antenna array, and the third antenna array all operate on different operating frequency bands. The antenna system provided in the embodiments of this application is described in detail below with reference to the specific accompanying drawings. However, it should be understood that antenna systems shown in the accompanying drawings are merely specific implementations for ease of describing the antenna system. In the antenna system provided in the embodiments of this application, different antenna arrays may be arranged in the deployment manners shown in the accompanying drawings, and are not limited to the deployment schemes shown in the figures.

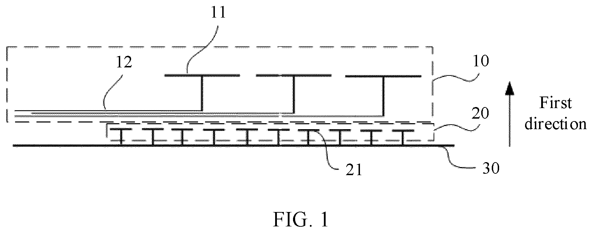

As shown in FIG. 1, FIG. 1 shows an antenna system according to an embodiment of this application. The antenna system includes a first antenna array 20 and a second antenna array 10. The first antenna array 20 and the second antenna array 10 are antennas operating on different operating frequency bands. For example, the first antenna array 20 is 5G antennas, and the second antenna array 10 is 2G, 3G, or 4G antennas. Alternatively, the first antenna array 20 is 2G, 3G, or 4G antennas, and the second antenna array 10 is 5G antennas.

The first antenna array 20 includes a plurality of first antennas 21 arranged in arrays. Only one column of first antennas are shown in FIG. 1. However, it should be understood that a quantity of columns of first antennas 21 is not limited in this embodiment of this application. A plurality of columns of first antennas 21 may be selectively disposed as required, for example, two columns, three columns, or four columns of first antennas 21. When the first antenna array 20 operates, the first antenna array 20 is fed through a first feeding network (not shown in the figure).

The second antenna array 10 includes a plurality of second antennas 11 arranged in arrays. Only one column of second antennas 11 are shown in FIG. 1. However, a quantity of second antennas 11 is not specifically limited in this embodiment of this application. A plurality of columns of second antennas 11 may be disposed as required, for example, two columns, three columns, or four columns of second antennas 11. When the second antenna array 10 operates, the second antenna array is fed by a second feeding network 12. The second feeding network 12 is connected to a plurality of second antennas.

Still refer to FIG. 1. The antenna system further includes a first reflection panel 30. The first antenna array 20 and the second antenna array 10 are stacked on the first reflection panel 30 along a first direction. In FIG. 1, the direction indicated by the arrow is the first direction, and the first direction is a direction perpendicular to a reflection surface of the first reflection panel 30. As shown in FIG. 1, the first antennas 21 in the first antenna array 20 are fixedly disposed on the reflection surface of the first reflection panel 30, and the first feeding network is disposed on a side of the first reflection panel 30 that is away from the reflection surface. The second antennas 11 in the second antenna array 10 and the second feeding network 12 are disposed at positions away from the first reflection panel 30. As shown in FIG. 1, the second feeding network 12 is disposed between the second antenna array 10 and the first antenna array 20.

Still refer to FIG. 1. As can be learned from FIG. 1, the first antenna array 20 and the first reflection panel 30 are disposed as a whole, and therefore, may be used as one module. The second antenna array 10, the first antenna array 20, and the first reflection panel 30 are disposed at intervals. For example, an antenna array is disposed on an existing base station. When the first antenna array 20 needs to be added, a reflection panel of the existing antenna array is removed, and antennas in the existing antenna array are fastened by using a reinforcing structure (such as a radome or a support frame). Then, a module including the added antenna array and a reflection panel is added to a side of the antenna array that is opposite to the first direction, to form the structure shown in FIG. 1. The first antenna array 20 is the existing antenna array, and the second antenna array 10 is the added antenna array. Alternatively, an added antenna array is directly disposed in front of (a side indicated by the first direction) an existing antenna array, to form the structure shown in FIG. 1. The existing antenna array may be the first antenna array 20 in FIG. 1, and the added antenna array may be the second antenna array 10. By using the foregoing manner, the base station does not need to be refit in a large scale, thereby facilitating addition of a communication frequency band of the base station and improving a communication effect of the base station.

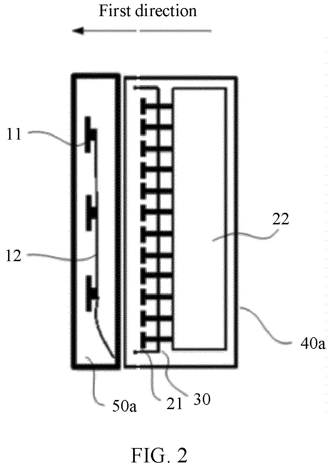

Refer to FIG. 2. FIG. 2 shows another specific implementation of an antenna system. For a same reference number in FIG. 2, refer to the reference number in FIG. 1. For a first antenna array and a second antenna array shown in FIG. 2, refer to the related descriptions of the first antenna array and the second antenna array in FIG. 1. Still refer to FIG. 2. In addition to the first antenna array and the second antenna array shown in FIG. 1, the antenna system shown in FIG. 2 further includes a first radome 40a and a second radome 50a. The first radome 40a and the second radome 50a are arranged in a first direction. The second antennas 11 in the second antenna array and the second feeding network 12 are both disposed in the second radome 50a. The first antenna array and the first reflection panel 30 are disposed in the first radome 40a. FIG. 2 further shows a first phase shifter 22 of the first antenna array. The first phase shifter 22 is disposed in the first radome 40a, and the first phase shifter 22 is connected to a plurality of first antennas 21 through a first feeding network and transmits a signal to the first antennas 21. As can be learned from FIG. 2, the first antenna array and the first reflection panel 30 form one module by using the first radome 40a. During assembly, the first radome 40a may be directly disposed on a side of the second radome 50a that is opposite to the first direction.

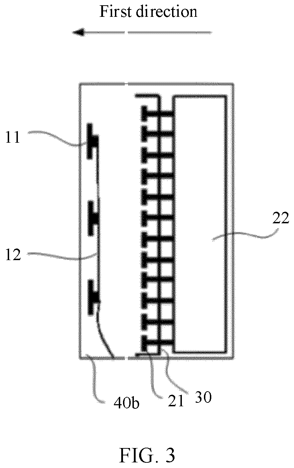

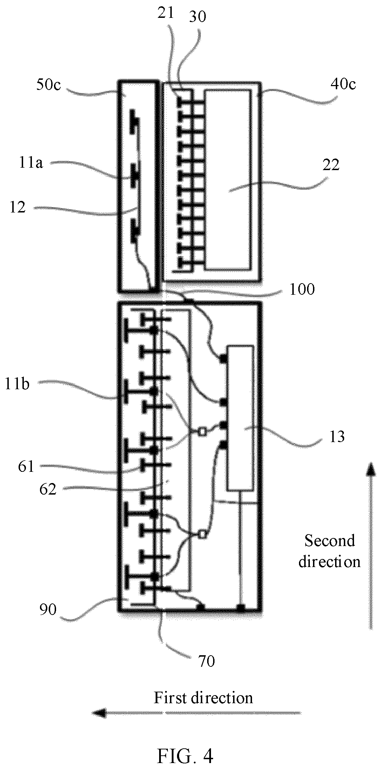

As shown in FIG. 3, FIG. 3 is an example not forming part of the invention of a modification of the antenna system shown in FIG. 2. In an antenna system shown in FIG. 3, a first antenna array and a second antenna array are the same as the first antenna array and the second antenna array in FIG. 2. A difference is that only one first radome 40b is disposed in FIG. 3; and the second antenna array, a second feeding network 12, the first antenna array, and a first reflection panel 30 are sequentially arranged along a first direction and are disposed in a same radome (the first radome 40b). It should be understood that the examples of the antenna systems shown in FIG. 2 and FIG. 3 may be selectively disposed based on actual conditions. Different antenna arrays may be disposed in different radomes or a same radome. As shown in FIG. 4, FIG. 4 shows an example of a specific example not forming part of the invention in which an antenna system includes three antenna arrays. For a same reference number in FIG. 4, refer to the same reference number in FIG. 1. The antenna system shown in FIG. 4 includes a first antenna array, a second antenna array, and a third antenna array. As shown in FIG. 4, first antennas 21 in the first antenna array are disposed on a first reflection panel 30 and are connected to a first phase shifter 22 through a first feeding network. The first antenna array, the first reflection panel 30, and the first phase shifter 22 are disposed in a first radome 40c. A plurality of second antennas 11 in the second antenna array are divided into two parts, which are a first part of second antennas 11a and a second part of second antennas 11b. The first part of second antennas 11a include a plurality of second antennas 11a, and the second part of second antennas 11b include a plurality of second antennas 11b. The first part of second antennas 11a and a second feeding network 12 correspondingly connected to the first part of second antennas 11a are disposed in a second radome 50c. Still refer to FIG. 4, the third antenna array includes a plurality of third antennas 61, and the third antenna array is fed by a third feeding network. The second part of second antennas 11b and the third antenna array are disposed on a second reflection panel 70; and the second part of second antennas 11b, the third antenna array, and the second reflection panel 70 are arranged in a first direction. The second part of second antennas 11b, the third antenna array, and the second reflection panel 70 are disposed in a third radome 90. In the antenna system shown in FIG. 4, a second phase shifter 13 and a third phase shifter 62 are further shown. The second phase shifter 13 and the third phase shifter 62 are arranged in the third radome 90 along the first direction. The second phase shifter 13 is connected to the second phase shifter 13 through the second feeding network corresponding to the second part of second antennas 11b. The second feeding network 12 corresponding to the first part of second antennas 11a is connected to the second phase shifter 13 through a jumper 100 between the second radome 50c and the third radome 90. The third antenna array is connected to the third phase shifter 62 through a third feeding network.

Still refer to FIG. 4. The first radome 40c and the second radome 50c are arranged along a first direction; and the first radome 40c, the second radome 50c, and the third radome 90 are arranged along a second direction. As shown in the directions indicated by the arrows in FIG. 4, the second direction is a direction perpendicular to the first direction. In the antenna system shown in FIG. 4, the first reflection panel 30 and the second reflection panel 70 are also arranged along the second direction, so that the second reflection panel 70 and the first antenna array are staggered in space, in other words, the second reflection panel 70 is in an area in which the plurality of first antennas 21 are not overlapped, to prevent the second reflection panel 70 from blocking signal radiation of the first antennas 21, and reduce impact from the second reflection panel 70 on the first antennas 21.

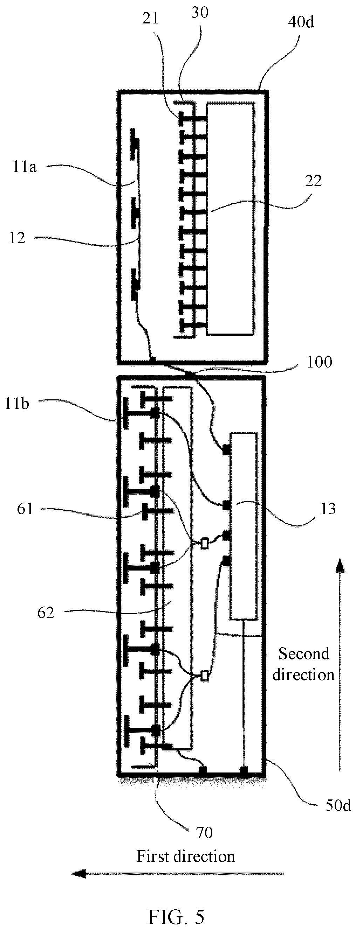

When the first antenna array, the second antenna array, and the third antenna array are arranged in the manner shown in FIG. 4, the radome shown in FIG. 3 may further be applied to FIG. 4 to form the antenna system shown in FIG. 5. The first radome 40c and the second radome 50c in FIG. 4 may be combined into a first radome 40d, and another radome is a second radome 50d. The first radome 40d and the second radome 50d are arranged along the second direction. The first part of second antennas 11a, the first antenna array, and the first reflection panel 30 are disposed in the first radome. The second part of second antennas 11b, the second reflection panel 70, and the second phase shifter 13 of the second antenna array are disposed in the second radome.

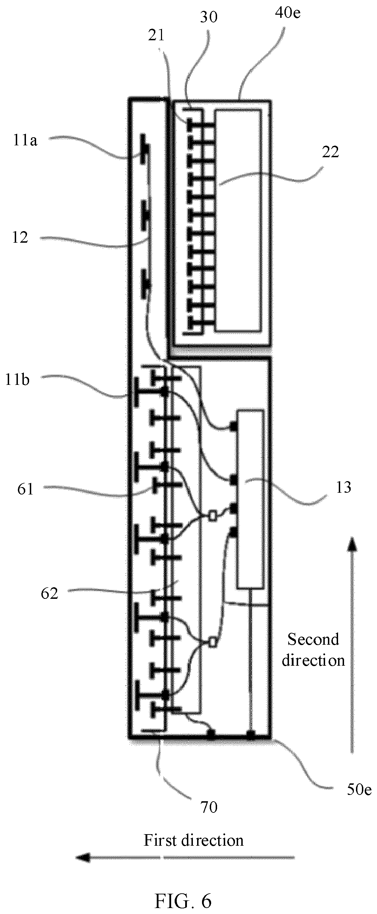

As shown in FIG. 6, FIG. 6 shows an example of another specific implementation in which an antenna system includes three antenna arrays. For a same reference number in FIG. 6, refer to the same reference number in FIG. 4. The antenna system shown in FIG. 6 includes a first antenna array, a second antenna array, and a third antenna array. Structures of the three antenna arrays are the same as the structures shown in FIG. 4. Details are not described herein again. The antenna system shown in FIG. 6 includes two radomes, which are a first radome 40e and a second radome 50e. As shown in FIG. 6, the second radome 50e is an L-shaped cover, the upper right corner of the second radome 50e has a notch (an arrangement direction of the antenna system in FIG. 6 is used as a reference direction), and the first radome 40e is disposed at the notch position of the second radome 50e. Still refer to FIG. 6. A plurality of first antennas 21, the first reflection panel 30, and the first phase shifter 22 are arranged in the first radome 40e along a first direction.

The second radome 50e is an L-shaped structure. The first radome 40e is located at the notch position of the second radome 50e. The first part of second antennas 11a are located in the second radome 50e and are stacked with the first antenna 21 and the first reflection panel 30 along the first direction. The second part of second antennas 11b, the third antenna array, the second reflection panel 70, the third phase shifter 62, and the second phase shifter 13 are stacked in the second radome 50e along the first direction.

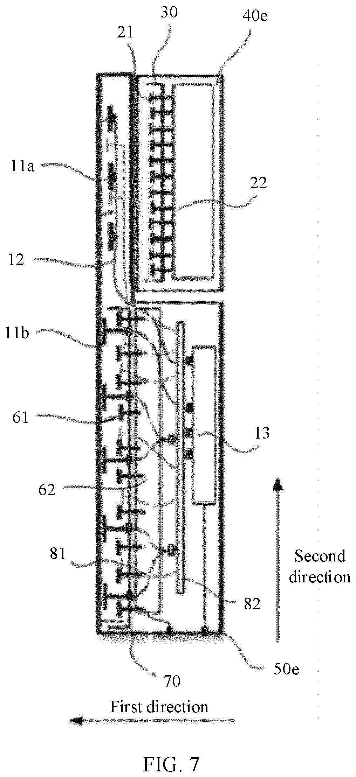

As shown in FIG. 7, FIG. 7 shows another structure of an antenna system. For a reference number in FIG. 7, refer to the same reference number in FIG. 6. A difference between the antenna system shown in FIG. 7 and the antenna system shown in FIG. 6 is that a fourth antenna array is added to the antenna system shown in FIG. 7. A first antenna array, a second antenna array, a third antenna array, and the fourth antenna array are antenna arrays operating on different frequency bands. For example, the operating frequency band of the first antenna array is 5G, the operating frequency band of the second antenna array is 4G, the operating frequency band of the third antenna array is 3G, and the operating frequency band of the fourth antenna array is 2G. Still refer to FIG. 7. The first antenna array, the second antenna array, and the third antenna array are disposed in a manner the same as that shown in FIG. 6. Details are not described herein again. The fourth antenna array, the second antenna array, and the third antenna array are stacked on a second reflection panel 70. For example, the fourth antenna array includes a plurality of fourth antennas 81. A fourth phase shifter 82 feeds the fourth antenna array through a fourth feeding network. During arrangement of the fourth antenna array, the fourth antenna array and the third antenna array are located on a same side of the second reflection panel 70, and the fourth antenna array is fixedly disposed on the second reflection panel 70. The fourth phase shifter 82 and the fourth antennas 81 are separately arranged on two sides of the second reflection panel 70.

It should be understood that the antenna arrays included in the antenna systems shown in FIG. 4 to FIG. 7 are merely examples. A quantity of antenna arrays and a specific combination manner are not limited in the embodiments/examples of this application. For example, the antenna systems provided in the embodiments/examples of this application may use a manner shown in FIG. 6 in which the second antenna array and the third antenna array are disposed in one radome and the first antenna array is disposed in another radome, may use a manner in which the second antenna array is independently disposed in one radome and the first antenna array and the third antenna array are disposed in one radome, may use a manner in which the first antenna array and the second antenna array are disposed in one radome and the third antenna array is independently disposed in one radome, and so on. The first antenna array, the second antenna array, and the third antenna array may be randomly arranged as required. Corresponding radomes may be accordingly assembled based on the arrangement manner for the first antenna array, the second antenna array, and the third antenna array.

An embodiment of this application further provides a base station. The base station includes any one of the foregoing antenna systems and a digital phase shifter connected to the antenna system. As can be learned from the foregoing antenna systems, in the base station provided in this embodiment of this application, different modules may be added to the antenna systems as required to improve communication performance of the existing base station, thereby reducing costs of refitting the base station.

It is clear that a person skilled in the art can make various modifications and variations to this application without departing from the scope of this application. This application is intended to cover these modifications and variations of this application provided that they fall within the scope of protection defined by the following claims.

## Claims

1. An antenna system comprising:
∘ a first antenna array (20), a second antenna array (10), a first radome (40a), a second radome (50a), a first reflection panel (30), and a second feeding network (12),
∘ wherein the first antenna array (20) and the second antenna array (10) are antenna arrays configured to operate on different frequency bands,
∘ wherein the first antenna array (20) and the second antenna array (10) are stacked, and the first antenna array (20) and the second antenna array (10) share the first reflection panel (30),
∘ wherein the first antenna array (20) and the first reflection panel (30) are disposed in the first radome (40a),
∘ and the second antenna array (10) and the second feeding network (12) are disposed in the second radome (50a).

2. The antenna system according to claim 1, further comprising a first feeding network configured to feed the first antenna array, wherein the first antenna array is fixedly disposed on a reflection surface of the first reflection panel, the first feeding network is disposed on a side of the first reflection panel that is away from the reflection surface.

3. The antenna system according to claim 1 or 2, wherein the second feeding network is configured to feed the second antenna array, wherein the second feeding network is disposed between the second antenna array and the first antenna array.

4. The antenna system according to any one of claims 1 to 3, further comprising a second reflection panel, wherein the second antenna array comprises a first part of second antennas and a second part of second antennas;
wherein that the first antenna array (20) and the second antenna array (10) are stacked, and the first antenna array (20) and the second antenna array (10) share the first reflection panel (30) comprises: the first part of second antennas and the first antenna array are stacked and share the first reflection panel; and
the second part of second antennas are disposed on the second reflection panel.

5. The antenna system according to claim 4, further comprising a third antenna array, wherein the first antenna array, the second antenna array, and the third antenna array are antenna arrays configured to operate on different frequency bands; and
the third antenna array and the second part of second antennas are stacked on the second reflection panel.

6. The antenna system according to claim 5, wherein the third antenna array and the second reflection panel are disposed in the second radome.

7. The antenna system according to claim 5 or 6, further comprising a fourth antenna array, wherein the first antenna array, the second antenna array, the third antenna array, and the fourth antenna array are antenna arrays configured to operate on different frequency bands; and
the fourth antenna array, the second antenna array, and the third antenna array are stacked on the second reflection panel.

8. The antenna system according to any one of claims 1 to 7, wherein the second radome is an L-shaped structure, and the first radome is located at the notch position of the second radome.

9. The antenna system according to any one of claims 1 to 7, wherein the first radome and the second radome are arranged in a first direction, wherein the first direction is a direction perpendicular to a reflection surface of the first reflection panel.

10. The antenna system according to claim 4 or any one of claims 5-9 when depending on claim 4, wherein the first
reflection panel and the second reflection panel are arranged along a second direction, the second direction is perpendicular to a first direction, and the first direction is a direction perpendicular to a reflection surface of the first reflection panel.

11. A base station, comprising the antenna system according to any one of claims 1 to 10 and a digital phase shifter connected to the antenna system.

## Patentansprüche

1. Antennensystem, umfassend:
∘ ein erstes Antennenarray (20), ein zweites Antennenarray (10), ein erstes Radom (40a), ein zweites Radom (50a), ein erstes Reflexionspaneel (30) und ein zweites Speisenetz (12),
∘ wobei das erste Antennenarray (20) und das zweite Antennenarray (10) Antennenarrays sind, die dazu konfiguriert sind, auf unterschiedlichen Frequenzbändern betrieben zu werden,
∘ wobei das erste Antennenarray (20) und das zweite Antennenarray (10) gestapelt sind und das erste Antennenarray (20) und das zweite Antennenarray (10) das erste Reflexionspaneel (30) gemeinsam nutzen,
∘ wobei das erste Antennenarray (20) und das erste Reflexionspaneel (30) in dem ersten Radom (40a) angeordnet sind,
∘ und das zweite Antennenarray (10) und das zweite Speisenetz (12) in dem zweiten Radom (50a) angeordnet sind.

2. Antennensystem nach Anspruch 1, ferner umfassend ein erstes Speisenetz, das dazu konfiguriert ist, das erste Antennenarray zu speisen, wobei das erste Antennenarray fest auf einer Reflexionsfläche des ersten Reflexionspaneels angeordnet ist und das erste Speisenetz auf einer Seite des ersten Reflexionspaneels angeordnet ist, die von der Reflexionsfläche weg ist.

3. Antennensystem nach Anspruch 1 oder 2, wobei das zweite Speisenetz dazu konfiguriert ist, das zweite Antennenarray zu speisen, wobei das zweite Speisenetz zwischen dem zweiten Antennenarray und dem ersten Antennenarray angeordnet ist.

4. Antennensystem nach einem der Ansprüche 1 bis 3, ferner umfassend ein zweites Reflexionspaneel, wobei das zweite Antennenarray einen ersten Teil zweiter Antennen und einen zweiten Teil zweiter Antennen umfasst;
wobei, dass das erste Antennenarray (20) und das zweite Antennenarray (10) gestapelt sind und das erste Antennenarray (20) und das zweite Antennenarray (10) das erste Reflexionspaneel (30) gemeinsam nutzen, Folgendes umfasst: der erste Teil zweiter Antennen und das erste Antennenarray sind gestapelt und nutzen das erste Reflexionspaneel gemeinsam; und der zweite Teil zweiter Antennen ist auf dem zweiten Reflexionspaneel angeordnet.

5. Antennensystem nach Anspruch 4, ferner umfassend ein drittes Antennenarray, wobei das erste Antennenarray, das zweite Antennenarray und das dritte Antennenarray Antennenarrays sind, die dazu konfiguriert sind, auf unterschiedlichen Frequenzbändern betrieben zu werden; und
das dritte Antennenarray und der zweite Teil zweiter Antennen auf dem zweiten Reflexionspaneel gestapelt sind.

6. Antennensystem nach Anspruch 5, wobei das dritte Antennenarray und das zweite Reflexionspaneel in dem zweiten Radom angeordnet sind.

7. Antennensystem nach Anspruch 5 oder 6, ferner umfassend ein viertes Antennenarray, wobei das erste Antennenarray, das zweite Antennenarray, das dritte Antennenarray und das vierte Antennenarray Antennenarrays sind, die dazu konfiguriert sind, auf unterschiedlichen Frequenzbändern betrieben zu werden; und das vierte Antennenarray, das zweite Antennenarray und das dritte Antennenarray auf dem zweiten Reflexionspaneel gestapelt sind.

8. Antennensystem nach einem der Ansprüche 1 bis 7, wobei das zweite Radom eine L-förmige Struktur ist und sich das erste Radom an der Kerbenposition des zweiten Radoms befindet.

9. Antennensystem nach einem der Ansprüche 1 bis 7, wobei das erste Radom und das zweite Radom in einer ersten Richtung angeordnet sind, wobei die erste Richtung eine Richtung senkrecht zu einer Reflexionsfläche des ersten Reflexionspaneels ist.

10. Antennensystem nach Anspruch 4 oder einem der Ansprüche 5-9 wenn abhängig von Anspruch 4, wobei das erste Reflexionspaneel und das zweite Reflexionspaneel entlang einer zweiten Richtung angeordnet sind, die zweite Richtung senkrecht zu einer ersten Richtung ist und die erste Richtung eine Richtung senkrecht zu einer Reflexionsfläche des ersten Reflexionspaneels ist.

11. Basisstation, umfassend das Antennensystem nach einem der Ansprüche 1 bis 10 und einen digitalen Phasenschieber, der mit den Antennensystem verbunden ist.

## Revendications

1. Système d'antennes comprenant :
∘ un premier réseau d'antennes (20), un deuxième réseau d'antennes (10), un premier radôme (40a), un second radôme (50a), un premier panneau de réflexion (30) et un second réseau d'alimentation (12),
∘ dans lequel le premier réseau d'antennes (20) et le deuxième réseau d'antennes (10) sont des réseaux d'antennes configurés pour fonctionner sur des bandes de fréquences différentes,
∘ dans lequel le premier réseau d'antennes (20) et le deuxième réseau d'antennes (10) sont empilés, et le premier réseau d'antennes (20) et le deuxième réseau d'antennes (10) partagent le premier panneau de réflexion (30),
∘ dans lequel le premier réseau d'antennes (20) et le premier panneau de réflexion (30) sont disposés dans le premier radôme (40a),
∘ et le second réseau d'antennes (10) et le second réseau d'alimentation (12) sont disposés dans le second radôme (50a).

2. Système d'antennes selon la revendication 1, comprenant également un premier réseau d'alimentation configuré pour alimenter le premier réseau d'antennes, dans lequel le premier réseau d'antennes est disposé de manière fixe sur une surface de réflexion du premier panneau de réflexion, le premier réseau d'alimentation est disposé sur un côté du premier panneau de réflexion qui est éloigné de la surface de réflexion.

3. Système d'antennes selon la revendication 1 ou 2, dans lequel le second réseau d'alimentation est configuré pour alimenter le deuxième réseau d'antennes, dans lequel le second réseau d'alimentation est disposé entre le deuxième réseau d'antennes et le premier réseau d'antennes.

4. Système d'antennes selon l'une quelconque des revendications 1 à 3, comprenant également un second panneau de réflexion, dans lequel le deuxième réseau d'antennes comprend une première partie de secondes antennes et une seconde partie de secondes antennes ;
dans lequel le fait que le premier réseau d'antennes (20) et le deuxième réseau d'antennes (10) sont empilés, et que le premier réseau d'antennes (20) et le deuxième réseau d'antennes (10) partagent le premier panneau de réflexion (30) comprend : la première partie de secondes antennes et le premier réseau d'antennes sont empilés et partagent le premier panneau de réflexion ; et
la seconde partie de secondes antennes est disposée sur le second panneau de réflexion.

5. Système d'antennes selon la revendication 4, comprenant également un troisième réseau d'antennes, dans lequel le premier réseau d'antennes, le deuxième réseau d'antennes et le troisième réseau d'antennes sont des réseaux d'antennes configurés pour fonctionner sur des bandes de fréquences différentes ; et
le troisième réseau d'antennes et la seconde partie de secondes antennes sont empilés sur le second panneau de réflexion.

6. Système d'antennes selon la revendication 5, dans lequel le troisième réseau d'antennes et le second panneau de réflexion sont disposés dans le second radôme.

7. Système d'antennes selon la revendication 5 ou 6, comprenant également un quatrième réseau d'antennes, dans lequel le premier réseau d'antennes, le deuxième réseau d'antennes, le troisième réseau d'antennes et le quatrième réseau d'antennes sont des réseaux d'antennes configurés pour fonctionner sur des bandes de fréquences différentes ; et
le quatrième réseau d'antennes, le deuxième réseau d'antennes et le troisième réseau d'antennes sont empilés sur le second panneau de réflexion.

8. Système d'antennes selon l'une quelconque des revendications 1 à 7, dans lequel le second radôme est une structure en forme de L, et le premier radôme est situé à la position d'encoche du second radôme.

9. Système d'antennes selon l'une quelconque des revendications 1 à 7, dans lequel le premier radôme et le second radôme sont disposés dans une première direction, dans lequel la première direction est une direction perpendiculaire à une surface de réflexion du premier panneau de réflexion.

10. Système d'antennes selon la revendication 4 ou l'une quelconque des revendications 5 à 9 lorsqu'elles dépendent de la revendication 4, dans lequel le premier panneau de réflexion et le second panneau de réflexion sont disposés le long d'une seconde direction, la seconde direction est perpendiculaire à une première direction, et la première direction est une direction perpendiculaire à une surface de réflexion du premier panneau de réflexion.

11. Station de base, comprenant le système d'antennes selon l'une quelconque des revendications 1 à 10 et un déphaseur numérique connecté au système d'antennes.
